# EUROPEAN PATENT APPLICATION

(11) **EP 2 206 571 A1**
(43) Date of publication of application: **14.07.2010**
(21) Application number: 08846822.8
(22) Date of filing: 31.10.2008
(51) Int. Cl.: B23B 3/30, B23B 15/00, B23B 21/00, B23B 29/24

(54) **MACHINE TOOL**

(30) Priority: 09.11.2007 JP 2007292271
(71) Applicant: Citizen Machinery Co., Ltd., Nagano 389-0294 (JP)
(72) Inventor: KASUYA, Hiroshi, Kitasaku-gun Nagano 389-0294 (JP)
(74) Representative: Borchert, Uwe Rudolf
(86) International application number: PCT/JP2008/003147
(87) International publication number: WO 2009/060579

(57) **Abstract**

[Problem] The invention provides a machining tool capable of achieving speed-up of transfers of workpieces among a plurality of spindles, downsizing the whole machine and facilitating maintenance works and others of the spindles.

[Solution] A machining tool 100 includes a plurality of spindles 111 and a plurality of tool rests 130. The respective spindles 111 are juxtaposed movably in the X-axis direction and each of the tool rests 130 are disposed on the end surface side of the spindle. The workpiece W is machined by tools 131 by moving the spindle 111 in the X-axis direction and moving the spindle 111 and the tool rest 130 relatively in the Z-axis direction. The machining tool further includes a workpiece holding means 140 between the neighboring two spindles 111 and moving ranges of the neighboring spindles 111 in the X-axis direction are set so as to include position where the both spindles 111 face to the workpiece holding means 140 so that the workpiece may be transferred among the both spindles 111 and the workpiece holding means 140.

## Description

### TECHNOLOGICAL FIELD

The present invention relates to a machining tool for cutting a workpiece.

### BACKGROUND TECHNOLOGY

Hitherto, there has been known a multi-spindle lathe system having a turret having first and second spindles for holding a workpiece and several kinds of cutting tools provided corresponding to the first and second spindles and first and second loaders for transferring the workpiece between the first and second spindles (see Patent Document 1 for example).

There has been also known a machining tool having a first spindle disposed vertically and downwardly, a second spindle disposed under the first spindle vertically and upwardly and stationary first and second tool rests disposed corresponding to the first and second spindles (see Patent Document 2 for example).
Patent Document 1: Japanese Patent No. 2993383 (Claims, FIG. 1)
Patent Document 2: Japanese Patent Application Laid-open No. Hei. 1-228701 (Claims, FIG. 1)

### DISCLOSURE OF THE INVENTION

### Problems to be Solved by the Invention

The multi-spindle lathe system as disclosed in Patent Document 1 has a problem because it transfers the workpiece between the first and second spindles by using the complicated and large-scale first and second loaders, the system structure is complicated and enlarged just corresponding to the installed first and second loaders.

The prior art machining tool as disclosed in Patent Document 2 has a problem that because the first and second spindles must be disposed so as to face from each other, a wide spindle installing space is required in an axial direction of the spindle (in the Z-axis direction) and the system structure is thus enlarged.
Further, because the first and second spindles face to different directions, respectively, the prior art machining tool has a problem that it is unable to handle these first and second spindles from a work area in the same one direction and it is not easy to carry out maintenance works and tooling of the spindles.

### Means for Solving the Problems

According to Claim 1 of the invention, there is provided a machining tool having a plurality of spindles and a plurality of tool rests corresponding to the respective spindles; the respective spindles being juxtaposed movably in the X-axis direction orthogonal to the Z-axis direction that is an axial line direction thereof;
each of the tool rests being disposed on the end surface side of the spindle so as to face to the spindle; and
the workpiece held on the side of the end surface of the spindle being machined by tools attached on the tool rest while moving the spindle in the X-axis direction and moving the spindle and the tool rest relatively in the Z-axis direction;
the machining tool further comprising a workpiece holding means for holding the workpiece between the neighboring two spindles; and
moving ranges of the neighboring spindles in the X-axis direction being set so as to include position where the both spindles face to the workpiece holding means so that the workpiece may be transferred among the both spindles and the workpiece holding means.

According to Claim 2 of the invention, in addition to the structure described in Claim 1, the respective spindles are disposed so that the workpiece holding-side end surface faces in the same one direction.

According to Claim 3 of the invention, in addition to the structure described in Claim 1 or 2, each spindle is rotatably supported by each separate spindle slide, the feed slide is mounted on a bed movably in the X-axis direction, each spindle slide is mounted on each separate feed slide movably in the Z-axis direction and each tool rest is fixedly mounted on the bed.

According to Claim 4 of the invention, in addition to the structure described in any one of Claims 1 through 3, the both spindles are provided movably on a common track extending in the X-axis direction.

According to Claim 5 of the invention, in addition to the structure described in any one of Claims 1 through 3, the both spindles are provided respectively movably on different tracks extending in the X-axis direction.

According to Claim 6 of the invention, in addition to the structure described in any one of Claims 1 through 5, the workpiece holding means is provided between the both tool rests corresponding to the neighboring both spindles.

According to Claim 7 of the invention, in addition to the structure described in any one of Claims 1 through 5, the workpiece holding means is attached turnably centering on an axial line orthogonal to the X-axis and Z-axis directions.

According to Claim 8 of the invention, in addition to the structure described in any one of Claims 1 through 7, the workpiece holding means is attached turnably centering on an axial line orthogonal to the X-axis and Z-axis directions.

### Advantages of the Invention

According to the machining tool of the invention, the movable ranges of the both neighboring spindles in the X-axis direction overlap so that the both spindles can transfer the workpiece to/from the workpiece holding means, so that the workpiece may be transferred among the spindles through the intermediary of the workpiece holding means and the production efficiency of the workpieces may be improved by cutting the workpieces simultaneously by the respective spindles while transferring the workpieces among the plurality of spindles.
Still more, because the invention requires no complicated and large-scale loader unlike the prior art multi-spindle lathe system, the machining tool capable of simultaneously machining workpieces while transferring the workpieces among the plurality of spindles may be constructed simply in compact while suppressing the overall height.

Still more, because the machining tool of the invention permits to machine the workpiece by sequentially transferring the workpiece to the plurality of spindles that handle post-machining through the workpiece holding means after supplying the workpiece, i.e., a material to be machined, to the spindle that handles the front machining among the plurality of spindles, the workpiece may be machined sequentially by the respective spindles just by providing one workpiece supplying means without providing workpiece supplying means for supplying a new workpiece to the spindles per each of the plurality of spindles.

Further, because the respective spindles are disposed so that the workpiece holding-side end surface face in the same one direction, it becomes possible to handle the all spindles from a work area in the same one direction and to readily carry out tooling and maintenance works and others.
Further, because the spindles need not to be faced in the Z-axis direction, it is possible to avoid the machining tool from being enlarged in the Z-axis direction.

Because the both spindles are provided respectively movably on the common track extending in the X-axis direction, a space for installing the track required in the Z-axis direction may be kept to a minimum, avoiding the machining tool from being enlarged in the Z-axis direction.

However, the both spindles may be also provided respectively movably on the different tracks extending in the X-axis direction.

The workpiece holding means is provided in the space between the both tool rests, so that a large variety of tools may be set on the tool rests regardless of the workpiece holding means.

However, when the workpiece holding means is attached to the tool rest, no space for installing the workpiece holding means needs to be provided on the bed and the workpiece holding means and the tool rest may be handled readily in a body.

If the workpiece holding means is attached turnably centering on the axial line orthogonal to the X-axis and Z-axis directions, the workpiece holding direction may be turned by 180 degrees in transferring the workpiece among the plurality of spindles and various machining may be implemented on the workpiece.

### BRIEF DESCRIPTION OF DRAWINGS

FIG. 1 is an overall schematic view of a machining tool according to one embodiment of the invention.
FIG. 2 is an enlarged view of a main part C in FIG. 1.
FIG. 3 is a view seen from above FIG. 2.
FIG. 4 is a view seen in a direction of arrows from the position of a line F4 - F4 in FIG. 3.
FIG. 5 is an explanatory view showing workpiece machining operations of the machining tool.
FIG. 6 is an explanatory view of a first step in the starting operation shown in FIG. 5.
FIG. 7 is an explanatory view of a second step in the starting operation shown in FIG. 5.
FIG. 8 is an explanatory view of a third step in the starting operation shown in FIG. 5.
FIG. 9 is an explanatory view of a fourth step in the starting operation shown in FIG. 5.
FIG. 10 is an explanatory view of a fifth step in the starting operation shown in FIG. 5.
FIG. 11 is an explanatory view of a sixth step in the starting operation shown in FIG. 5.
FIG. 12 is an explanatory view of a second step in the normal operation shown in FIG. 5.
FIG. 13 is an explanatory view of a third step in the normal operation shown in FIG. 5.
FIG. 14 is an explanatory view of a fourth step in the normal operation shown in FIG. 5.
FIG. 15 is an explanatory view of a fifth step in the normal operation shown in FIG. 5.
FIG. 16 is an explanatory view of a fourth step in the ending operation shown in FIG. 5.
FIG. 17 is an explanatory view of a fifth step in the ending operation shown in FIG. 5.
FIG. 18 is an explanatory view of a sixth step in the ending operation shown in FIG. 5.
FIG. 19 shows a modified example in which the both spindles are provided respectively movably on different tracks.
FIG. 20 is an explanatory view of a turnably provided workpiece holding means.
FIG. 21 is an explanatory view of the turning operation of the workpiece holding means.

### DESPRIPTION OF REFERENCE NUMERALS

- 100: machining tool
- 110A: first spindle slide
- 111A: first spindle
- 110B: second spindle slide
- 111B: second spindle
- 120A: first feed slide
- 120B: second feed slide
- 130A: first tool rest
- 131A: tool
- 130B: second tool rest
- 131B: tool
- 140: workpiece holding means
- 160: rail
- 170: rail
- 180A: loader
- 180B: unloader
- 190A: driving motor
- 190B: driving motor
- W: workpiece

### BEST MODE FOR CARRYING OUT THE INVENTION

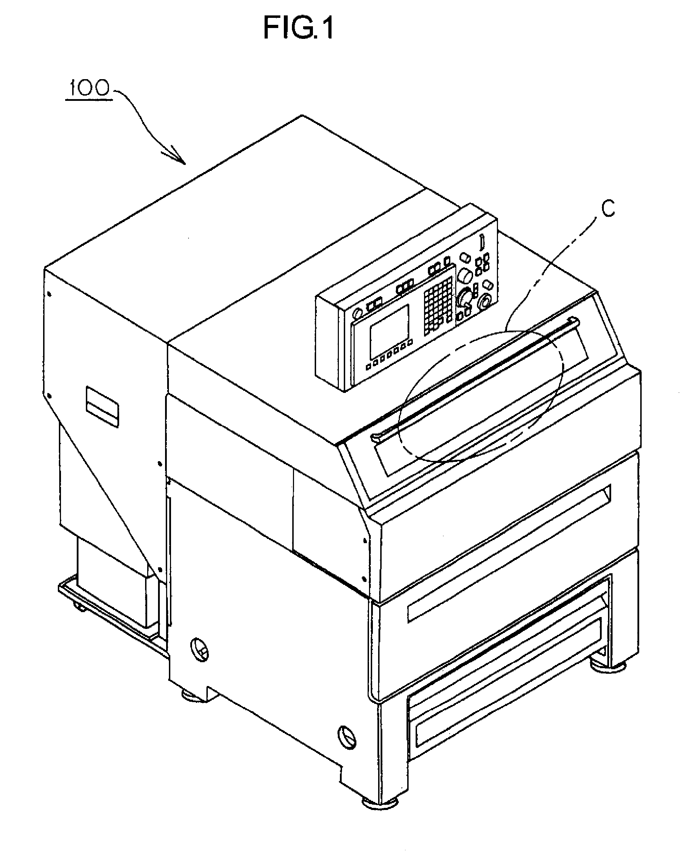

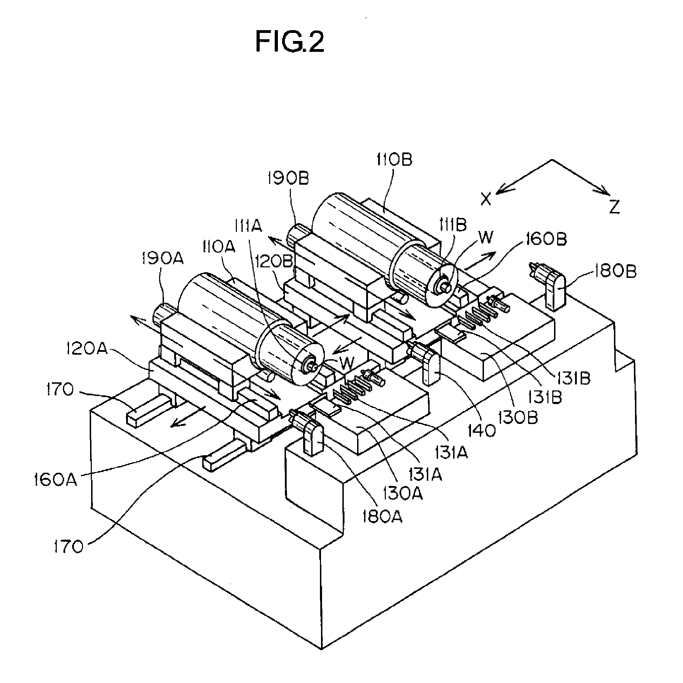

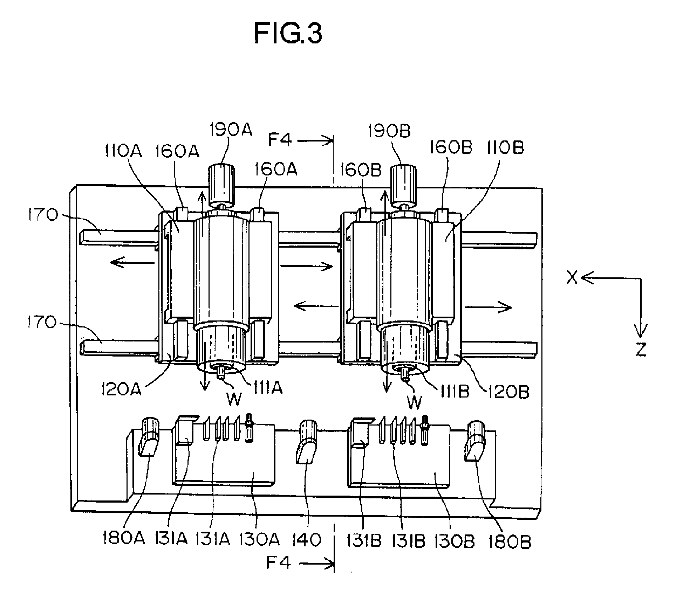

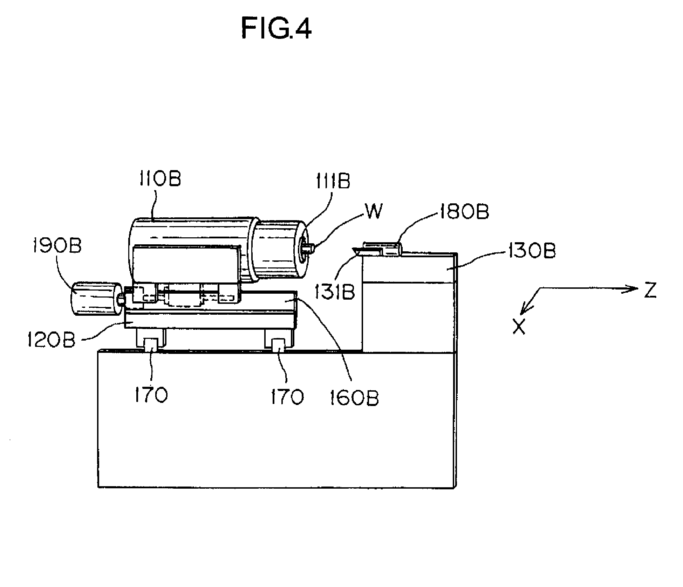

A machining tool 100 of the present embodiment shown in FIG. 1 has, within a part C, a first spindle slide 110A for turnably supporting a first spindle 111A and a second spindle slide 110B for turnably supporting a second spindle 111B as shown in FIGs. 2 through 4.
The first and second spindle slides 110A and 110B are juxtaposed side by side so that the axial direction of the first spindle 111A and the axial direction of the second spindle 111B run in parallel from each other.
A chuck for gripping and holding the workpiece W is provided on the side of one end surface of the first and second spindles 111A and 111B.
The both spindles 111A and 111B are disposed so that the end surfaces thereof on the side of the chuck face in the same direction.

The first spindle slide 110A is mounted on a first feed slide 120A and the second spindle slide 110B is mounted on a second feed slide 120B. The first and second feed slides 120A and 120B are provided with rails 160A and 160B that extend in the Z-axis direction, i.e., in the axial direction of the both spindles 111A and 111B. The first spindle slide 110A is slidably mounted on the rails 160A and the second spindle slide 110B is slidably mounted on the rails 160B. The first spindle slide 110A is slidably driven in the Z direction along the rails 160A by a driving motor 190A and the second spindle slide 110B is slidably driven in the Z direction along the rails 160B by a driving motor 190B.

Rails 170 that extend in the X-axis direction, i.e., the lateral direction orthogonal to the Z-axis direction, are mounted on a bed. The first and second feed slides 120A and 120B are slidably movably mounted on the rails 170. The first and second feed slides 120A and 120B are respectively moved and driven separately on the same rails 170.

The move and driving of the first and second spindle slides 110A and 110B in the X-axis direction and the move and driving of the first and second feed slides 120A and 120B in the Z-axis direction are controlled by a control means not shown. The moves in the Z-axis and X-axis directions of the both spindles 111A and 111B are controlled respectively by the move and driving of the first and second spindle slides 110A and 110B and that of the first and second feed slides 120A and 120B controlled by the control means.

Corresponding to the first spindle 111A, a first tool rest 130A is fixed on the bed while facing to a chuck-side end surface of the first spindle 111A and corresponding to the second spindle 111B, a second tool rest 130B is fixed on the bed while facing to a chuck-side end surface of the second spindle 111B. The both tool rests 130A and 130B are comb-like tool rests on which machining tools 131A and 131B are juxtaposed in the X-axis direction.

The workpiece W held on the end surface side of the spindles 111A and 111B may be cut by the tools respectively attached to the corresponding tool rests 130A and 130B by moving and driving the both spindles 111A and 111B respectively in the Z-axis and X-axis directions.
It is noted that selection of the tools attached to the tool rests 130A and 130B may be made by moving the spindles 111A and 111B in the X-axis direction.

Although an order of the tools 131A and 131B disposed on the tool rests 130A and 130B is not specifically limited, the plurality of respective tools 131A and 131B are mounted on the respective tool rests 130A and 130B from the upstream side in order of tools used in machining the workpiece in the forward moving direction from the first tool rest 130A to the second tool rest 130B in the present embodiment. Thereby, the both spindles 111A and 111B are allowed to select the tools 131A and 131B sequentially in a shortest possible time by moving in one direction of the forward moving direction.

A workpiece holding means 140 is fixed to the bed between the first and second tool rests 130A and 130B. The workpiece holding means 140 is composed of a chuck capable of gripping and holding the workpiece W.
Provided on the upstream-side of the forward moving direction of the first tool rest 130A is a loader 180A for supplying the workpiece W to the first spindle 111A. The loader 180A is composed of a chuck capable of gripping and holding the workpiece W.
Provided on the downstream-side of the forward moving direction of the second tool rest 130B is an unlader 180B for receiving the workpiece W machined by the tool 131B of the second tool rest 130B from the second spindle 131B.
The unloader 180B includes a chuck capable of gripping and holding the workpiece W.

A movable range in the X-axis direction of the first spindle 111A is set such that the first spindle 111A can move in the forward moving direction until when an axial line of the first spindle 111A is aligned with an axial line of the workpiece holding means 140 and can move in the reverse moving direction until when the axial line of the first spindle 111A is aligned with an axial line of the loader 180A.

A movable range in the X-axis direction of the second spindle 111B is set such that the second spindle 111B can move in the reverse moving direction until when an axial line of the second spindle 111B is aligned with the axial line of the workpiece holding means 140 and can move in the forward moving direction until when the axial line of the second spindle 111B is aligned with an axial line of the unloader 180B. The movable ranges in the X-axis direction of the first and second spindles 111A and 111B overlap in the range facing to the workpiece holding means 140.

When the first spindle 111A or the second spindle 111B faces to the workpiece holding means 140 so that their axial centers are aligned from each other, the workpiece may be transferred between the spindles 111A and 111B and the workpiece holding means 140 by slidably moving the spindles 111A and 111B in the Z-axis direction and by opening and closing the chucks of the spindles 111A and 111B and the workpiece holding means 140.

When the first spindle 111A faces to the loader 180A so that their axial centers are aligned from each other, the workpiece W may be supplied from the loader 180A to the first spindle 111A by slidably moving the first spindle 111A in the Z-axis direction and by opening and closing the chucks of the loader 180A and the first spindle 111A. When the second spindle 111B faces to the unloader 180B so that their axial centers are aligned from each other, the workpiece W may be conveyed from the second spindle 111B to the unloader 180B by slidably moving the second spindle 111B in the Z-axis direction and by opening and closing the chucks of the unloader 180B and the second spindle 111B.

The configuration described above permits to cut the workpiece W supplied from the loader 180A to the first spindle 111A by the tools 131A on the first tool rest 130A while sequentially selecting the tools by moving the first spindle 111A in the forward moving direction and to transfer the workpiece W from the first spindle 111A to the workpiece holding means 140 by moving the first spindle 111A in the forward moving direction after finishing machining of the workpiece by the first spindle 111A and the first tool rest 130A.

The configuration described above also permits the second spindle 111B to receive the workpiece W held by the workpiece holding means 140, to cut the workpiece W by the tools 131B on the second tool rest 130B while sequentially selecting the tools by moving the second spindle 111B in the forward moving direction and to convey the workpiece W from the second spindle 111B to the unloader 180B by moving the second spindle 111B in the forward moving direction after finishing machining of the workpiece W by the second spindle 111B and the second tool rest 130B.

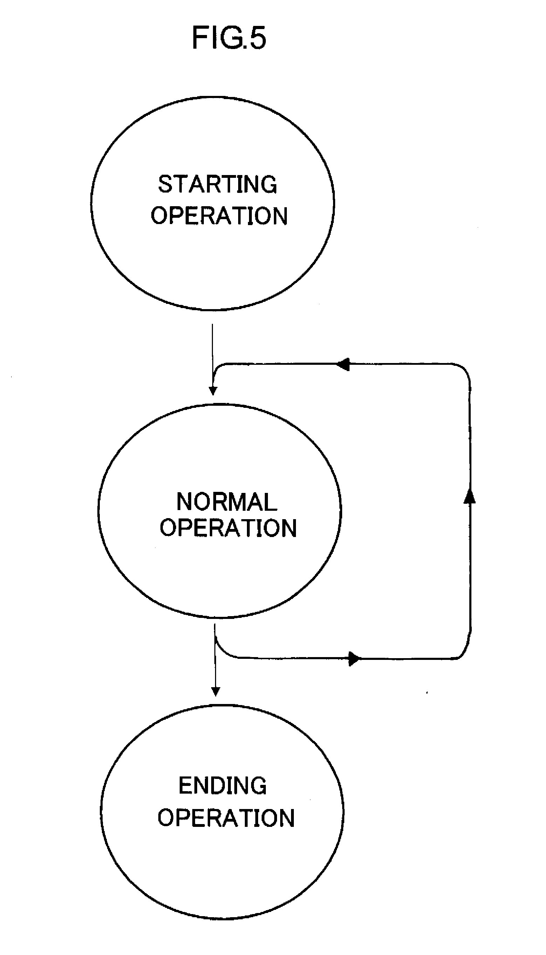

As shown in FIG. 5, a workpiece machining operation of the machining tool 100 of the present embodiment is composed of a starting operation carried out in starting the operation, a normal operation repetitively carried out after the starting operation and an ending operation carried out in ending the operation.

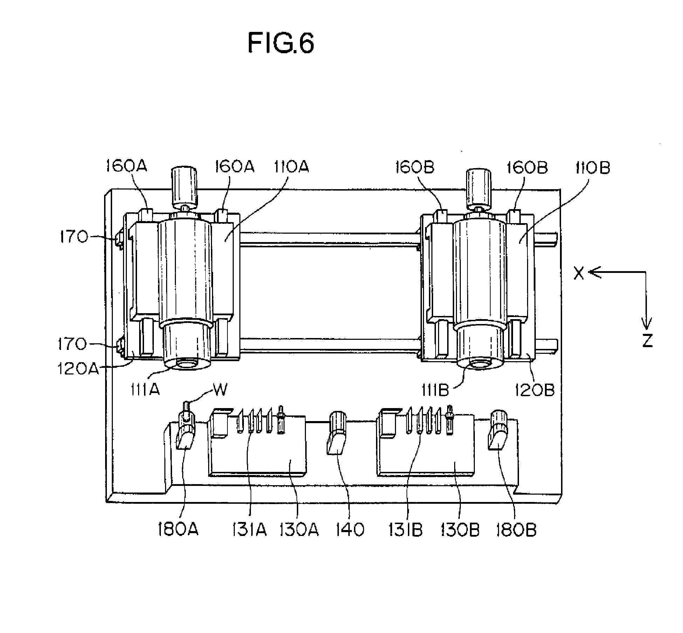

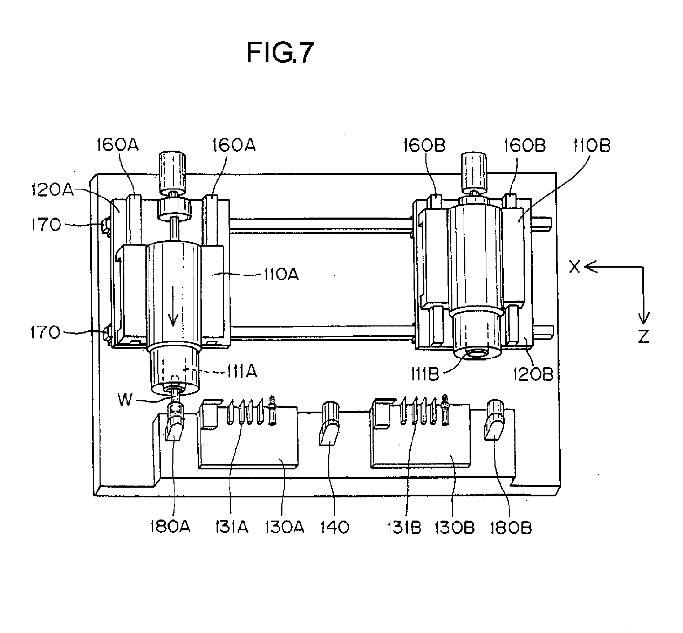

As the starting operation of the machining tool 100, the first feed slide 120A is moved first in the X-axis direction to the position where the axial line of the loader 180A is aligned with the axial line of the first spindle 111A from each other (first operation, see FIG. 6).
Next, the first spindle slide 110A is moved in the Z-axis direction so that the workpiece W is inserted into the chuck of the first spindle 111A and the workpiece W is supplied from the loader 180A to the first spindle 111A by opening the chuck of the loader 180A and by closing the chuck of the first spindle 111A (second operation, see FIG. 7).
It is noted that the workpiece is supplied from a workpiece supplying unit or the like to the loader 180A in advance. Because the supply of the workpiece to the loader 180A is already known, its detailed explanation will be omitted here.

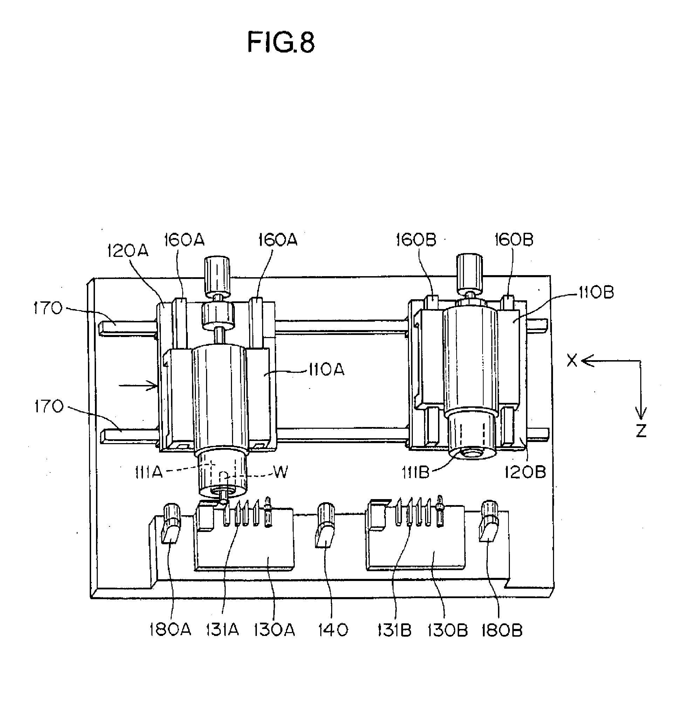

After that, in the machining tool 100, the first feed slide 120A and the first spindle slide 110A are moved to abut the workpiece W held by the first spindle 111A sequentially with the respective selected tools 131A on the first tool rest 130A to machine in a rotational state or the like while sequentially selecting the tools 131A on the first tool rest 130A by moving the first feed slide 120A in the forward moving direction (third operation, see FIG. 8).

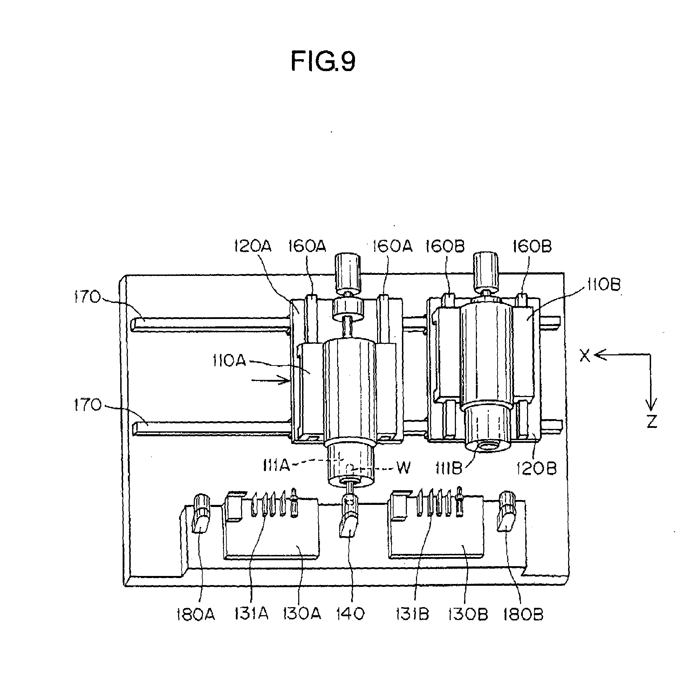

Then, in the machining tool 100, the first feed slide 120A is moved in the X-axis direction in the forward moving direction to the position where the axial line of the workpiece holding means 140 is aligned with the axial line of the first spindle 111A from each other, the first spindle slide 110A is moved in the Z-axis direction so that the first spindle 111A approaches to the workpiece holding means 140 and the workpiece is inserted into the chuck of the workpiece holding means 140 and the workpiece W is transferred to the workpiece holding means 140 by opening the chuck of the first spindle 111A and by closing the chuck of the workpiece holding means 140 (fourth operation, see FIG. 9).

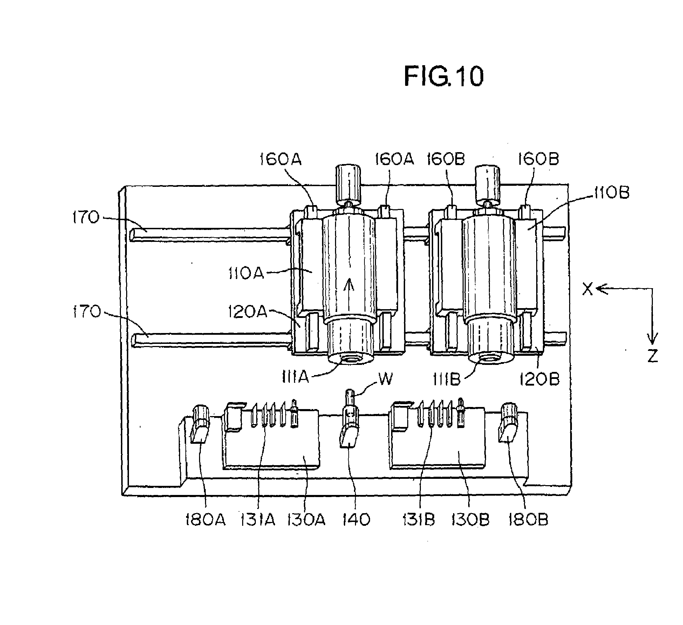

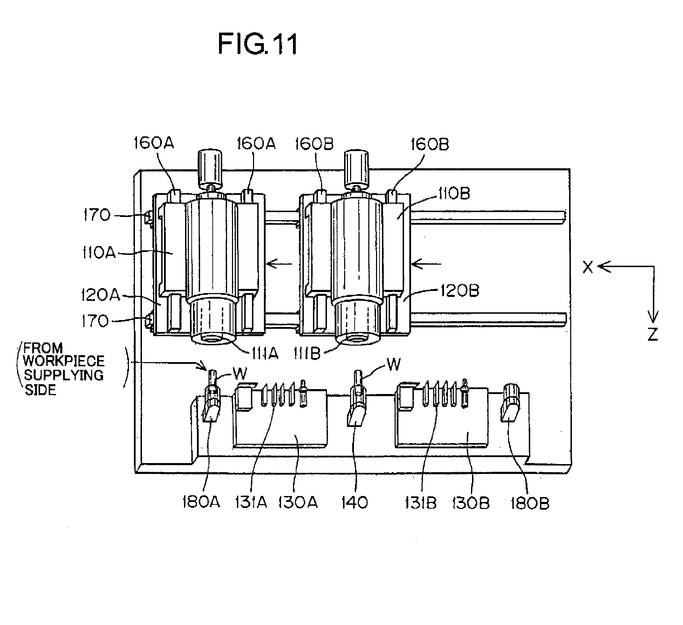

Then, the first spindle slide 110A is moved in the Z-axis direction so that the first spindle 111A backs away from the workpiece holding means 140 (fifth operation, see FIG. 10). After that, the first feed slide 120A is moved in the X-axis direction in the reverse moving direction to the position where the axial line of the loader 180A is aligned with the axial line of the first spindle 111A from each other and the second feed slide 120B is moved in the X-axis direction to the position where the axial line of the workpiece holding means 140 is aligned with the axial line of the second spindle 111B from each other (sixth operation, see FIG. 11).
Thus, the series of starting operations is completed. The second spindle slide 110B stands by at position where the second spindle slide 110B will not hamper the move of the first spindle slide 110A in the X-axis direction in the first through fifth operations described above.

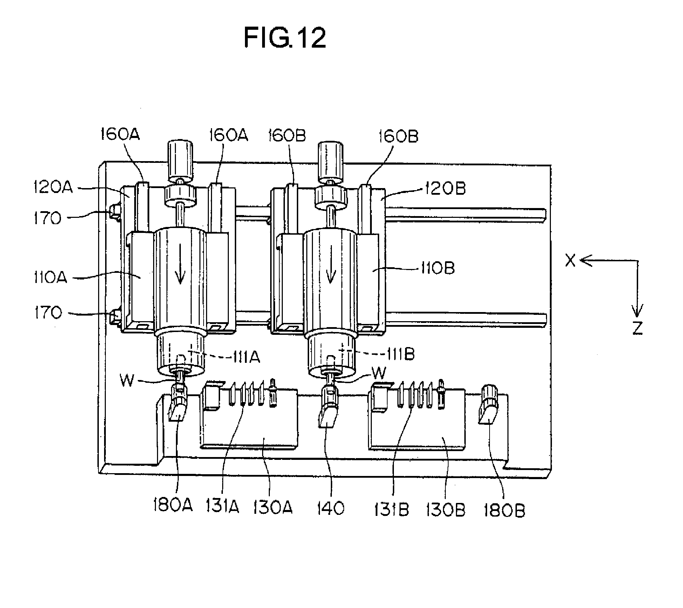

From the state (FIG. 11) of the sixth operation described above in which the first spindle 111A faces to the loader 180A and the second spindle 111B faces to the workpiece holding means 140, in the machining tool 100, the first spindle slide 110A is moved in the Z-axis direction so that the first spindle 111A approaches to the loader 180A to supply the workpiece W from the loader 180A to the first spindle 111A as described above.
In the machining tool 100, the second spindle slide 110B is also moved in the Z-axis direction so that the second spindle 111B approaches to the workpiece holding means 140 and the workpiece is inserted into the chuck of the second spindle 111B and supplies the workpiece W from the workpiece holding means 140 to the second spindle 111B by opening the chuck of the workpiece holding means 140 and closing the chuck of the second spindle 111B (first operation, see FIG. 12).

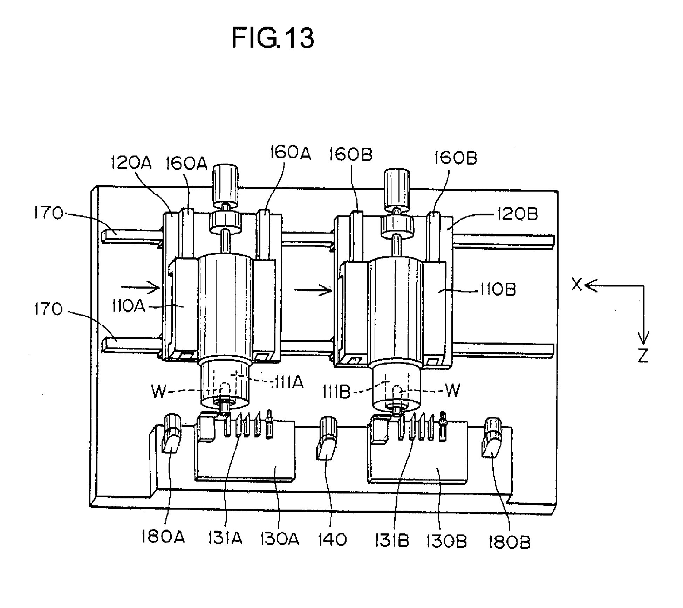

Then, the first feed slide 120A and the first spindle slide 110A are moved to machine the workpiece W of the first spindle 111A in the same manner as described above. The workpiece W held by the second spindle 111B is also machined by sequentially abutting with the respective selected tools 131B on the second tool rest 130B in a rotational state or the like by moving the second feed slide 120B and the second spindle slide 110B while sequentially selecting the tools 131B on the second tool rest 130B by moving the second feed slide 120B in the forward moving direction (second operation, see FIG. 13).

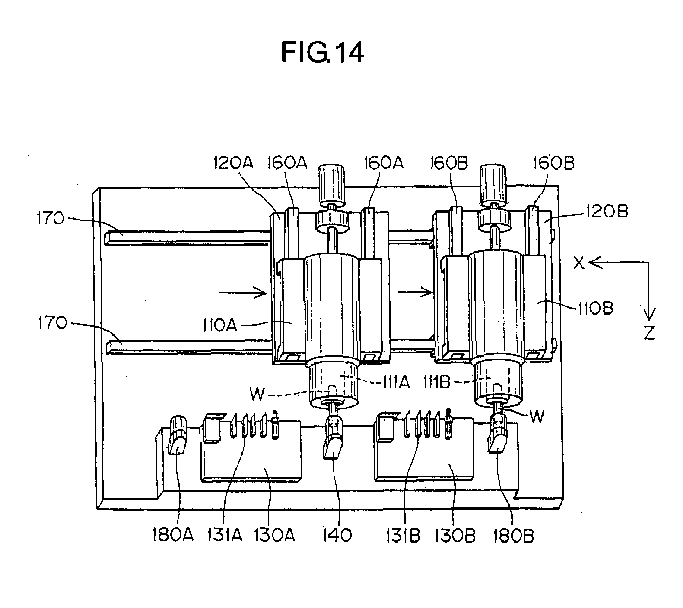

After that, the first feed slide 120A is moved in the X-axis direction in the forward moving direction to the position where the axial line of the first spindle 111A is aligned with the axial line of the workpiece holding means 140 from each other and is moved the first spindle slide 110A in the Z-axis direction so that the first spindle 111A approaches to the workpiece holding means 140 to transfer the workpiece W to the workpiece holding means 140. The second feed slide 120B is also moved in the X-axis direction in the forward moving direction to the position where the axial line of the second spindle 111B is aligned with the axial line of the unloader 180B from each other, the second spindle slide 110B is moved in the Z-axis direction so that the second spindle 111B approaches to the unloader 180B and the workpiece W is inserted into the chuck of the unloader 180B, and conveys out the workpiece W to the unloader 180B by opening the chuck of the second spindle 111B and by closing the chuck of the unloader 180B (third operation, see FIG. 14).

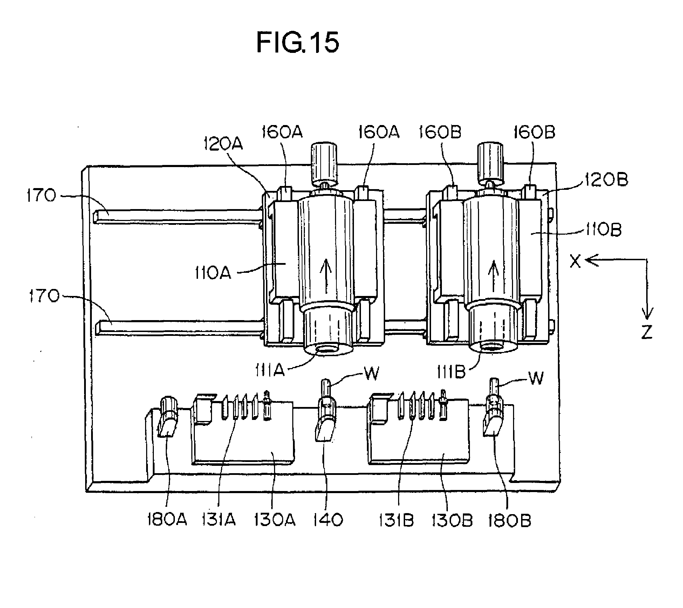

After that, the first spindle slide 110A is moved in the Z-axis direction so that the first spindle 111A backs away from the workpiece holding means 140 and the second spindle slide 110B is also moved in the Z-axis direction so that the second spindle 111B backs away from the unloader 180B (fourth operation, see FIG. 15).

After that, the first feed slide 120A is moved in the X-axis direction in the reverse moving direction to the position where the axial line of the loader 180A is aligned with the axial line of the first spindle 111A from each other and the second feed slide 120B is also moved in the X-axis direction in the reverse moving direction to the position where the axial line of the workpiece holding means 140 is aligned with the axial line of the second spindle 111B from each other as shown in FIG. 11.
Thus, the series of normal operations is completed. The normal operation described above is repeated corresponding to a number of workpieces to be machined and others.

Although the operation carried out in the state in which the first and second feed slides 120A and 120B are synchronized has been explained in the normal operation described above, there is no problem at all to arrange such that they operate with different timing, so long as they do not hamper the move in the X-axis direction from each other. It is also possible to arrange so as to automatically control the both feed slides 120A and 120B by the control means so that they do not hamper their moves in moving the both spindles 111A and 111B in the X-axis direction.

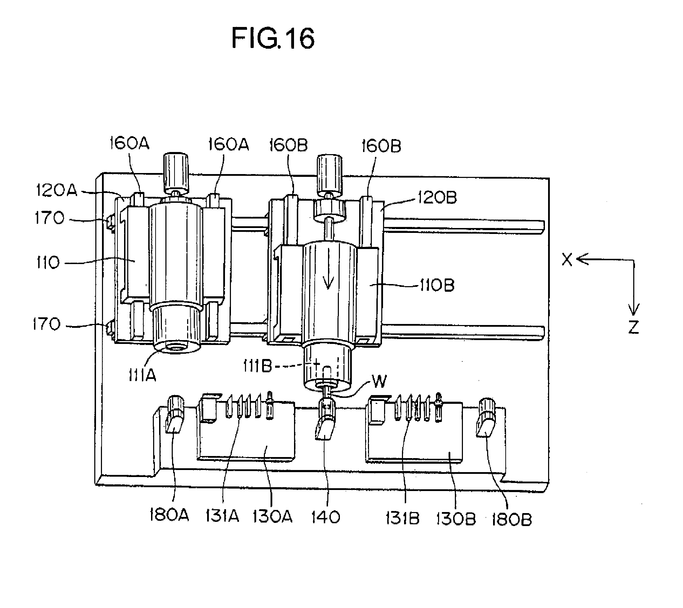

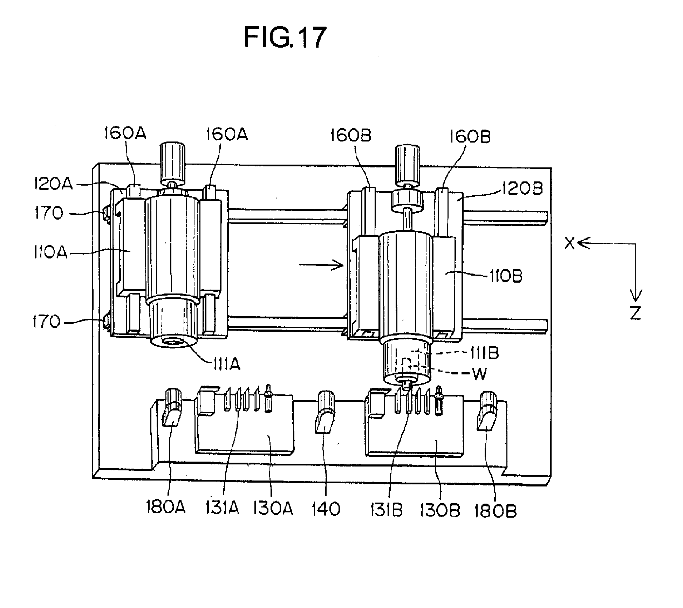

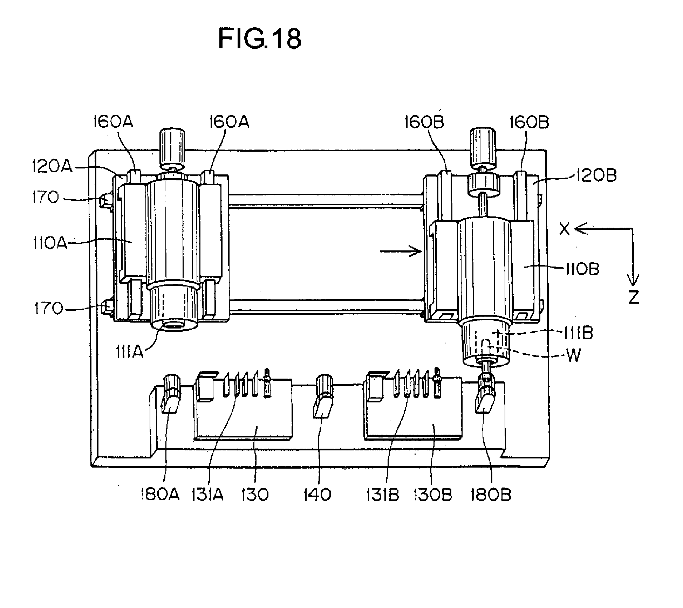

After when the first spindle 111A faces to the loader 180A after transferring the final workpiece machined by the first spindle 111A to the workpiece holding means 140 and when the second spindle 111B faces to the workpiece holding means 140, the second spindle slide 110B is moved in the Z-axis direction so that the second spindle 111B approaches to the workpiece holding means 140 to supply the workpiece W from the workpiece holding means 140 to the second spindle 111B as the ending operation (first operation, see FIG. 16).
Then, the workpiece W of the second spindle 111B is machined in the same manner described above by moving the second feed slide 120B and the second spindle slide 110B while sequentially selecting the tools 131B on the second tool rest 130B by moving the second feed slide 120B in the forward moving direction (second operation, see FIG. 17).
After that, the workpiece W held by the second spindle 111B is transferred to the unloader 180B (third operation, see FIG. 18).
Thus, the series of ending operations is completed.

The workpiece is machined while selecting the tools by moving the first or second feed slide 120A or 120B sequentially in the forward moving direction until when the workpiece is transferred from the first spindle 111A to the workpiece holding means 140 or from the second spindle 111B to the unloader 180B in all of the cases of the starting operations, normal operations and ending operations as described above, so that it is not necessary to move the first feed slide 120A or the second feed slide 120B from the forward moving direction to the reverse moving direction to select the tools and the efficiency for moving the first and second feed slides 120A and 120B is improved.

The moving range of the first spindle 111A in the X-axis direction overlaps with the moving range of the second spindle 111B in the X-axis direction at the part facing to the workpiece holding means 140 in the machining tool as described above, so that the workpiece may be transferred between the both spindles 111A and 111B through an intermediary of the workpiece holding means 140 with the simple structure by moving the both spindles 111A and 111B so as to transfer the workpiece held by the first spindle 111A from the first spindle 111A to the workpiece holding means 140 and to receive the workpiece held by the workpiece holding means 140 by the second spindle 111B from the workpiece holding means 140.
It is also possible to improve the workpiece production efficiency by machining the workpieces simultaneously by the two spindles 111A and 111B while transferring the workpiece between the both spindles 111A and 111B and carrying over the workpiece W sequentially to the neighboring spindle.
In particular, because no complicated and large loader like those in the prior art is required and the spindles need not to be faced in the Z-axis direction, the machining tool that includes a plurality of spindles and is capable of transferring the workpieces among the spindles may be constructed simply in compact.

Further, because it is not necessary to supply a new workpiece per each spindle according to the present embodiment, the workpiece W may be machined and conveyed sequentially by the first and second spindles 111A and 111B just by providing one loader 180A as a new workpiece supplying means and the workpiece supplying structure may be simplified. Further, because the first and second spindle slides 110A and 110B are juxtaposed in the X-axis direction, it is possible to avoid the machining tool from becoming large in the Z-axis direction as compared to the prior art machining tool that requires a large spindle installation space in the Z-axis direction.

Further, because the first and second spindles 111A and 111B are juxtaposed so that their chuck-side end surfaces face in the same direction according to the present embodiment, the first and second spindles 111A and 111B may be handled in a work area in the same direction and tooling and maintenance works and others of the first and second spindles 111A and 111B may be readily carried out.

Further, because the first and second feed slides 120A and 120B are mounted on the same rails 170 and the both spindles 111A and 111B are provided movably on the common track in the present embodiment, the space for installing the track required in the Z-axis direction may be kept to a minimum.

Still more, because the workpiece holding means 140 is provided in the separate area between the first and second tool rests 130A and 130B corresponding respectively to the both neighboring spindles 111A and 111B, a large variety of tools 131A and 131B may be set on the first tool rest 130A or the second tool rest 130B regardless of the workpiece holding means 140.

It is noted that that although the workpiece holding means 140 is not attached to the first tool rest 130A or the second tool rest 130B in the present embodiment described above, the workpiece holding means 140 may be integrally attached to the tool rests 130A and 130B. In this case, because no space for attaching the workpiece holding means 140 needs to be provided on the bed, the workpiece holding means 140 may be handled readily in a body with the tool rests 130A and 130B and the workpiece holding means 140 may be replaced in a body with the tool rests 130A and 130B for example.

Still more, the tool rests 130A and 130B may be integrally structured and the first tool rest 130A and the second tool rest 130B may be used in common by one tool rest.

Further, because the loader 180A, the unloader 180B and the workpiece holding means 140 are not located above the first and second spindles 111A and 111B and the mechanism of the present embodiment may be structured just by the chucks capable of transferring the workpiece between the spindles 111A and 111B, the mechanism for transferring the workpiece to the both spindles 111A needs not to be enlarged in the height direction and the overall height of the machining tool may be suppressed low.

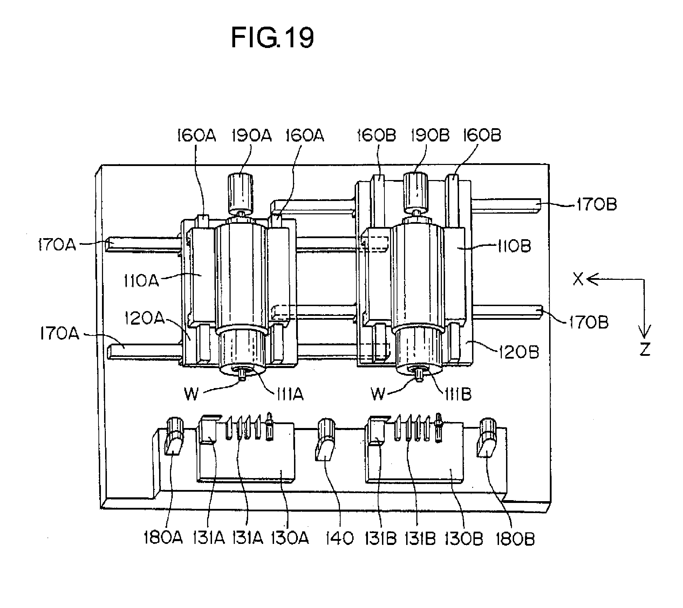

As for the mode for moving the spindles 111A and 111B, beside mounting the both feed slides 120A and 120B on the rails 170 as described above, the both feed slides 120A and 120B may be mounted on different rails 170A and 170B and the both spindles 111A and 111B may be respectively movably provided on different tracks extending in the X-axis direction as shown in FIG. 19. Still more, a concrete number of the spindles 111A and 111B and of the tool rests 130A and 130B may be any number as long as the number is two or more, respectively. The loader 180A and the unloader 180B may be what are structured in any form and are disposed in any mode.

The workpiece holding means 140 may have any mode in concrete. For example, a collet chuck, a vacuum chuck, a three-claw chuck, a four-claw chuck and the like may be used.

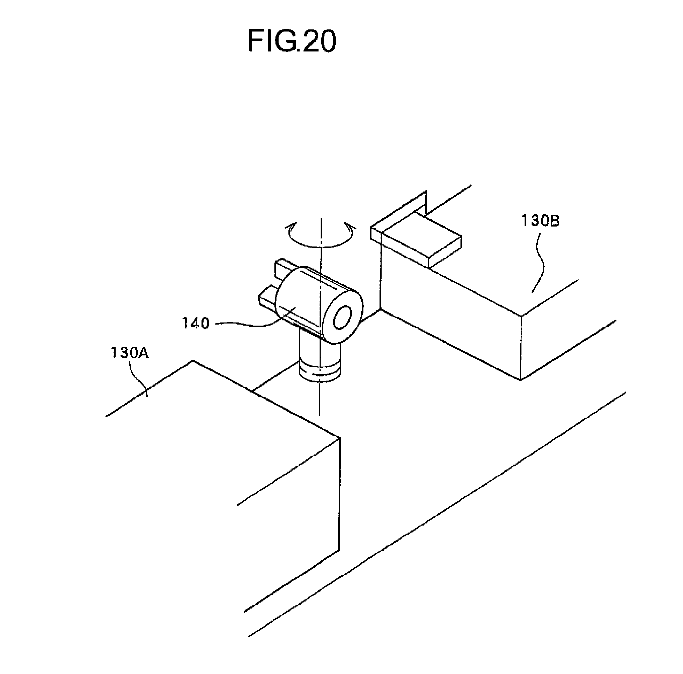

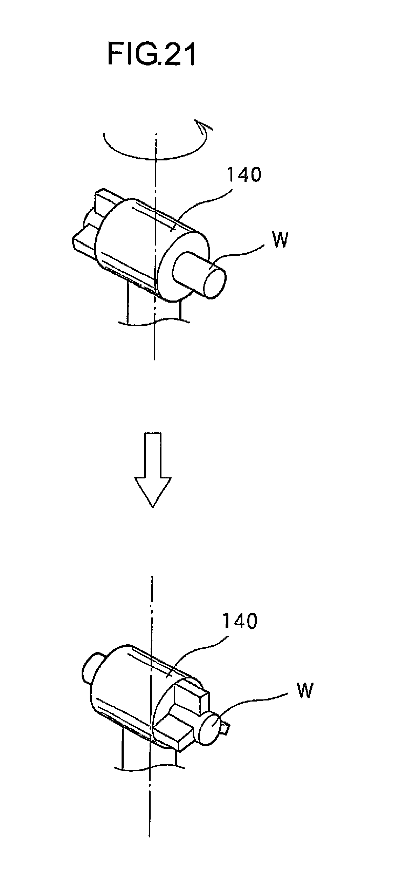

As another embodiment of the workpiece holding means 140, the workpiece holding means 140 may be arranged so as to be turnable centering on an axial line orthogonal to the X- and Z-axes as shown in FIG. 20. In this case, the workpiece holding means 140 is structured so that a machining-side end of the workpiece received from the first spindle 111A projects out of the side opposite from the inserted end. For instance, the workpiece holding means 140 may be structured to have a hollow holding part and a chuck as shown in FIG. 21. In this case, the workpiece may be held in the state in which the workpiece machining-side end projects out of the side opposite from the inserted end by grasping the workpiece by the chuck while projecting the both ends of the workpiece from the holding part.
When the workpiece is supplied from the workpiece holding means 140 to which the workpiece is transferred from the first spindle 111A to the second spindle 111B, the workpiece holding means 140 turns by 180 degrees and the second spindle 111B holds the workpiece by grasping the machined side machined by the first spindle 111A. Thereby, the second spindle 111B may machine the end of the non-machined side of the workpiece. The workpiece W may be machined variously and efficiently by sequentially machining the both ends of the workpiece by the first and second spindles 111A and 111B as described above.

It is noted that the workpiece holding means 140 may hold the workpiece W by any means such as nipping, adsorption, insertion to a hole and the like as long as the workpiece holding means 140 can steadily transfer the workpiece W to the spindles 111A and 111B even if the orientation of the workpiece W is turned by 180 degrees.

Still more, the loader 180A and the unloader 180B may be arranged so as to turn centering on an axial line orthogonal to the X-axis and Z-axis similarly to the workpiece holding means 140.

### INDUSTRIAL APPLICABILITY

As described above, the machining tool of the invention is suitably applied to a CNC multi-spindle lathe system and the like that cuts a plurality of parts of a workpiece by a plurality of tools.

## Claims

1. A machining tool comprising a plurality of spindles and a plurality of tool rests corresponding to the respective spindles;
the respective spindles being juxtaposed movably in the X-axis direction orthogonal to the Z-axis direction that is an axial line direction thereof;
each of the tool rests being disposed on the end surface side of the spindle so as to face to the spindle; and
the workpiece held on the side of said end surface of the spindle being machined by a tool attached on the tool rest while moving the spindle in the X-axis direction and moving the spindle and the tool rest relatively in the Z-axis direction;
said machining tool further comprising a workpiece holding means for holding the workpiece between the neighboring two spindles; and
moving ranges of said neighboring spindles in the X-axis direction being set so as to include position where the both spindles face to the workpiece holding means so that the workpiece may be transferred among the both spindles and the workpiece holding means.

2. The machining tool according to Claim 1, wherein the respective spindles are disposed so that the workpiece holding-side end surface faces in the same one direction.

3. The machining tool according to Claim 1 or 2, wherein each spindle is rotatably supported by each separate spindle slide, the feed slide is mounted on a bed movably in the X-axis direction, each spindle slide is mounted on each separate feed slide movably in the Z-axis direction and each tool rest is fixedly mounted on said bed.

4. The machining tool according to any one of Claims 1 through 3, wherein the both spindles are provided movably on a common track extending in the X-axis direction.

5. The machining tool according to any one of Claims 1 through 3, wherein the both spindles are provided respectively movably on different tracks extending in the X-axis direction.

6. The machining tool according to any one of Claims 1 through 5, wherein said workpiece holding means is provided between the both tool rests corresponding to the neighboring both spindles.

7. The machining tool according to any one of Claims 1 through 5, wherein said workpiece holding means is attached integrally to the tool rest.

8. The machining tool according to any one of Claims 1 through 7, wherein said workpiece holding means is attached turnably centering on an axial line orthogonal to the X-axis and Z-axis directions.
